# EUROPEAN PATENT SPECIFICATION

(11) **EP 1 730 930 B1**
(45) Date of publication and mention of the grant of the patent: **24.02.2016**
(21) Application number: 05729470.4
(22) Date of filing: 30.03.2005
(51) Int. Cl.: H04L 29/06, H04W 4/00, H04W 4/02, H04W 80/04

(54) **AUTHORISATION**
AUTORISIERUNG
AUTORISATION

(30) Priority: 31.03.2004 GB 0407335
(43) Date of publication of application: 13.12.2006
(73) Proprietor: BRITISH TELECOMMUNICATIONS public limited company, London EC1A 7AJ (GB)
(72) Inventor: MUDHAR, Parminder Singh, Felixstowe, Ipswich Suffolk IP11 7QZ (GB)
(74) Representative: Lidbetter, Timothy Guy Edwin
(86) International application number: PCT/GB2005/001237
(87) International publication number: WO 2005/096591

(56) References cited:
- WO-A-01/33797
- WO-A-01/37517
- WO-A-02/063847
- US-A1- 2002 136 407
- US-A1- 2003 039 234

## Description

The present invention relates to authorisation, in particular to authorisation using a digital certificate.

It is known to use digital certificates to authorise a node or a user, for example to authorise access to data or services for the node or user. Such certificates normally have a digital signature which is encrypted using a public key cryptography system. The digital signature is normally a function of the characters forming the message content of the certificate, such that a recipient can perform a function on the signature in order to determine with some degree of certainty that a received certificate has not been altered. The use of a digital certificate in authorising data transfer to or from a mobile node is particularly important. WO01/33797 discloses the use of digital certificates.

According to one aspect of the invention, there is provided a method of authorising data transfer to or from a mobile node temporarily connected to an attachment point of a network, the attachment point having a forwarding node associated therewith for forwarding messages to or from the mobile node, the method including the steps of: (a) receiving a digital certificate from the forwarding node, which certificate includes a message body and a digital signature for verifying the content of the message body, the message body having geographical information therein, which geographical information is derived from the physical location of the forwarding node; (b) performing a comparison between the geographical information of the certificate and a further item of geographical information; and, (c) making an authorisation decision for data transfer to or from the mobile node in dependence on the result of the comparison.

By including geographical information in a certificate from the forwarding node, the likelihood is reduced that an authorisation will be made in error or as a result of fraudulent activity.

Because the geographical information in the certificate will be derived from the physical location of the forwarding node, this will allow the location of the mobile node to be inferred from the geographical information in the certificate of the forwarding node. Location base services and other data can them be provided to the mobile node.

A further aspect of the invention is provided as specified in claim 12. The present invention is described in further detail below, by way of example only, with reference to the following drawings in which:
Figure 1 shows a network system according to the present invention;
Figure 2 is a schematic representation of a digital certificate;
Figure 3 is a schematic representation of message flows between nodes;
Figure 4 shows the transfer of messages involved in the creation of a security association; and,
Figure 5 is a more detailed exampled of a certificate.

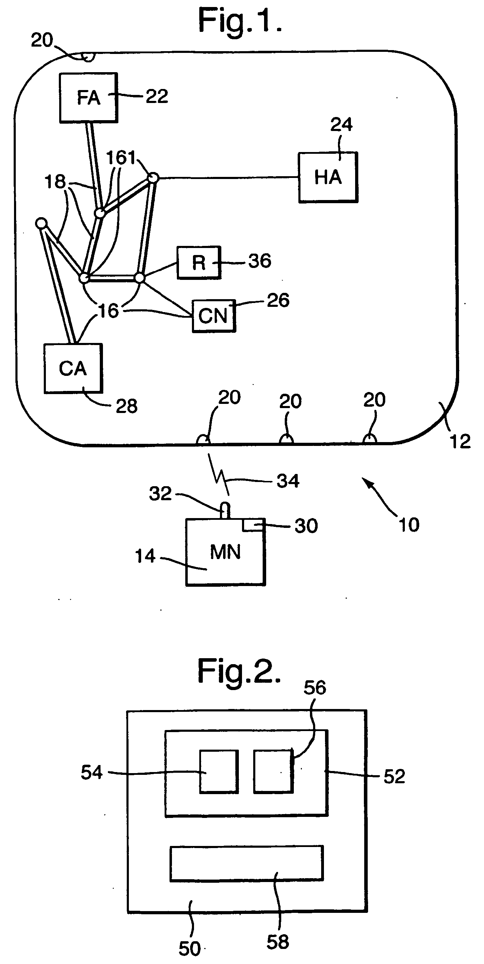

In Figure 1, there is shown a network system 10 having a main network 12 and at least one mobile node 14. The main network, which is preferably static, has a plurality of nodes 16 connected by links 18. Each node has an address, the addresses of the main network being arranged in a hierarchical system, such that the address of a node will normally indicate the topological position of that node. In the present example, th addresses of the nodes are addressed according to the Internet Protocol, preferably version V6.

The mobile node 14 is configured to make a temporary connection with any one of a plurality of spaced apart attachment points 20 of the main network 12. Each attachment point will normally have a node, termed a foreign agent (FA) node 22 associated therewith (only one is shown for clarity). The foreign agent will normally issue the mobile node with a temporary address, which address is topologically related to that of the issuing foreign agent, (for example, the addresses may share a common prefix portion) such that packets addressed to the temporary or "care-of" address of the mobile node will be routed by the network to the foreign agent, which can then forward the packets to the mobile nodes. The foreign agent will also serve to forward messages from the mobile node to another destination in the main network.

The mobile node has an associated Home Agent (HA) node in the main network 12. The association between the mobile node and its home agent is formed at least in part by a permanent address allocated by the home agent to the mobile node, which the mobile node retains as it moves from one attachment point to another. The permanent or "home" address of the mobile node will be topologically related to the address of the home agent (for example by sharing a common prefix portion with the home agent address) such that packets from a caller node 26 (CN) addressed to the home address of the mobile node can be intercepted by the home agent. To allow the home agent to forward a packet from the caller node 26 towards the current attachment point of the mobile node, the home agent will store a mapping between the current care-of address of the mobile node and its home address, which mapping will be updated when the mobile node attaches to a new attachment point: that is, when the mobile node transmits a binding update to its home agent informing the home agent of its new care-of address.

The mobile node may be a router or a communications device on a vehicle, or otherwise the mobile node may be a portable device, such as a laptop computer, or another type of movable device. Preferably, the mobile node will have temporary connection means 32 for making a temporary connection 34 with an attachment point, for example a radio receiver and/or transmitter for making a radio connection 34, or a releasable electrical or optical connector arrangement.

There are many circumstances in which authentication or other authorisation will be desirable before secure communication between two nodes is established. For example, the home agent for the mobile node may require proof of the identity of the mobile node before accepting a binding update, so as to reduce the risk of traffic intended for the mobile node being inadvertently forwarded by the home agent to a fraudulent node. The need for efficient security processes is particularly important in the case of traffic relating to a mobile node, since the topologically correct address of a mobile node is temporary, that is, changeable as the mobile node moves. However, there are other situations where authorisation or authentication can be important: for example, the home agent may have a policy of only passing information to specified foreign agents, or likewise, a foreign agent may have a policy of only allowing mobile nodes to attach to it whose identity or other characteristics fall within a specified or predetermined category.

To reduce the risk of fraudulent authentication or authorisation, or other data transfer taking place, the main network 12 will normally include a certificate authority agent, here implemented as a certificate authority (CA) node 28. (It will be appreciated that the nodes CA, FA, MN, and HA will be implemented on hardware which will include at least one memory and at least one processor means, the hardware and software running thereon being located at a single node or otherwise being distributed over spaced apart apparatus, for example over a plurality of nodes).

The certificate authority will normally employ a Public Key (PKI) encryption system. In such a system, also known as asymmetric key cryptography, an entity (such as a person or node) has associated therewith a pair of keys: a public key which is publicly accessible, for example by being distributed or being placed in a public directory; and, a private key; only accessible to the entity with which the pair of keys is associated. The pair of keys is mathematically linked, for example according to a known protocol developed by Diffie and Hellman. The mathematical function relating the two keys to one another is such that it is difficult, preferably unfeasible, to derive the private key from the related public key. This may be achieved by a function which requires an impractically large number to be factored in order to obtain the private key. Thus, a first person wishing to send an encrypted message for transmission to a second person can look up the public key associated with the first person in a public (and trusted) directory, and encrypt the message with the second person's public key. The second person can use their private key to decrypt the message. In this way, public key cryptography can be considered to be based on a one-way function, that is, a function which is significantly easier to perform in the forward direction than in the reverse direction. The public key provides an indication of an instance of the function, and the private key allows the function to be performed in the reverse direction.

In order to generate a certificate, the certificate authority will form a digital signature in association with the information content of the certificate. The digital signature will be the result of a mathematical algorithm, function, or other computation having as input parameters (a) the message content of the certificate, and (b) the private key of the certificate authority. In particular, the digital signature will preferably be the result of the encryption procedure using the private key of the certificate authority. A person wishing to read the certificate can then "de-crypt" the digital signature using the public key of the certificate authority (or equivalently, perform a function to generate signature information related to the encrypted signature). A checking algorithm can then be performed using the digital signature and the message content as input parameters to determine whether the received message corresponds to the digital signature, in particular whether the received message is the same as the transmitted message used to generate the digital signature. This is possible because for a given private key, the digital signature is (almost) unique to the message: that is, the likelihood of two different (non-identical messages) returning the same (even unencrypted) signature is very low. Furthermore, because the digital signature is encrypted, it is difficult for an unauthorised person to change the signature so as to reflect any changes that unauthorised person may have made to the message. In this way, the digital signature is indicative of the message content such that, by performing predetermined respective functions on the received message content and the digital signature, and by comparing the results of those functions, it is possible to determine if the message content as received has been altered.

In more detail, to generate a certificate, the certificate authority will: perform a "hash" function on the certificate (message) content, or other function chosen such that there is a low likelihood of two different contents yielding the same result. The result of the hash function, known as the message digest, is then encrypted using the certificate authority's private key according to a PKI protocol. A recipient can then perform a recipient computation, related to that used to create the signature. The recipient computation function involves the message content, the received signature, and the sender's (here the certificate authority) signature. If the result is correct according to a predetermined mathematical relation, the signature can be deemed genuine, since the message content is unlikely to have been altered.

Thus, a recipient can: "de-crypt" the signature using the public key, in order to obtain the message digest (or related information); perform the same hash function on the received message as was performed on the sent message; and, compare one message digest with the other. If these are the same, the signature is deemed genuine. When an entity (the issuee) is issued a certificate by the certificate authority, the message content of the certificate will normally contain at least some of the following items of information: name of issuing certificate authority; the public key of the certificate authority; an expiration date of the public key; the name or an identifier of the issuee; and, the public key of the issuee.

In addition, the message content will include location object identifier, or other geographical information, which geographical information is derived from a physical geographical position or an indication thereof. Examples of geographical information include; a latitude and longitude value (with optionally an altitude value); a map reference; a known place name; a street or road name; and, a street junction. Since geographical information is derived from a geographical location, it will be more reliable as an indication of position than other information such as an IP address, from which geographical position can sometimes be inferred.

A certificate 50 is illustrated in Figure 2, which shows: the message content 52; items of information such as geographical information 54; an identifier 56; and, the digital signature 58.

When the certificate authority issues a certificate to a node, the certificate authority will transmit the certificate to the requesting node over the network 12; that is, through one or more routing node 161 and links 18. The requesting node can then store the certificate in a memory, preferably in a local memory 30, such that the certificate can be transmitted to another node when needed, for example when information or services are required from that node.

Returning to the situation shown in Figure 1, the mobile node 14 and the foreign agent 22 will each be issued with a certificate by the certificate authority 28. The certificate for the mobile node will normally have geographical information indicative of an area associated with the home agent's physical location, but the geographical information in the mobile nodes certificate may be other static geographical information, for example information relating to the owner's place of residence. In more detail, the geographical information will normally be in the form of a value associated with a location object identifier. Likewise, the home agent and foreign agent are also sent respective certificates by the certificate authority 28. The value for the location objection identifier for the home agent and foreign agent correspond to their respective physical locations as expressed in latitude and longitude. In this example, the value of the location object identifier for the mobile node corresponds to that of the home agent.

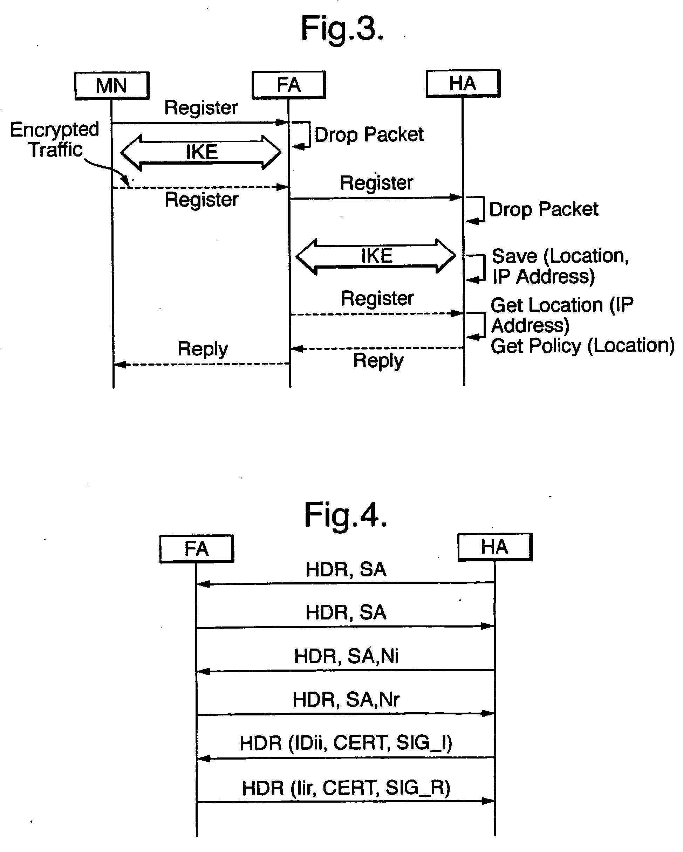

The steps involved in the attachment of the mobile node to the main network are shown schematically in Figure 3, in which information flow is indicated by arrows, increasing time being in the downward direction on the page. To begin the attachment process, the mobile node sends an initial registration packet to the foreign agent, which packet is "dropped" or read at the foreign agent. The initial packet triggers the start of an Internet Key Exchange (IKE) process for establishing a security association between the mobile node and the foreign agent, in which process protocols are agreed. Once a secure association has been established, the mobile node may send encrypted traffic to the foreign agent.

As part of the registration process between the mobile node and the foreign agent, the mobile node will send its certificate to the foreign agent. The foreign agent can then: de-crypt the digital signature using the public key of the certificate authority, which public key the foreign agent may obtain from the certificate authority itself; perform a function on the content, which function (normally a hash function) has previously agreed (for example during the IKE procedure on the message); compare the result of the function with the decrypted signature; and, if the comparison indicate a match, treat the certificate as genuine. Assuming the certificate is genuine (or to ascertain or further verify that the certificate is genuine), the foreign agent can then extract the location object identifier from the message content of the certificate. The foreign agent may be configured to make a decision as to whether to grant or refuse foreign agent functionality to a mobile node in dependence on the geographical information in the mobile nodes certificate. In particular, the foreign agent may be configured to compare the location object identifier of the mobile node to information indicative of the foreign agent's own physical location information, which may be stored locally, and only grant access if the two items of location information have a specified characteristic in common. For example, access may only be granted if the location information of the mobile node and foreign agent indicate respective positions within the same specified geographical area or within a specified distance of one another. In this way, the foreign agent can be configured to only grant access to a mobile node which originates from the same geographical district or country as the foreign agent.

After it has been established that the foreign agent can grant access, or provide other foreign agent functionality for the mobile node, the foreign agent will attempt to register with the home agent. To start this process, the foreign agent will transmit an initial registration packet, which packet is "dropped" at the home agent. This dropped packet initiates an IKE procedure as indicated in Figure 4. The home agent will receive a certificate from the foreign agent, and perform similar steps to those outlined above to determine whether the certificate is genuine. That is, the home agent will extract the location object identifier from the certificate of the foreign agent and will perform a comparison between the location object identifier and other stored geographical information. In particular, the home agent may compare the location object identifier against an expected location object identifier stored at a registry 36, which registry may store location object identifiers respectively mapped to the identity of mobile nodes and foreign agent nodes. Thus, the location object identifier in the certificate may serve to provide an additional security test in order to authenticate the foreign agent.

Once the mobile node is registered with the foreign agent, and the foreign agent is registered with the home agent, a secure association is formed on the one hand between the mobile node and the foreign agent, and on the other between the foreign agent and the home agent. Encrypted traffic can then be transmitted from the mobile node to the foreign agent, and then forwarded by the foreign agent to the home agent. However, in some embodiments, only the registration of the foreign agent with the home agent is needed for the mobile node to receive data from the home agent.

As the certificate is used for authentication in this secure association creation process, the location information contained in the certificate, and the associated IP address can be extracted and stored for future use. The home agent will normally have a security policy that grants or denies mobile IP services in dependence upon the location of the foreign agent. When a request for a mobile IP registration arrives at the home agent, the home agent may use the IP address of the request message to obtain the location of the care-of address for the mobile node. However, the certificate from the foreign agent will preferably be used to obtain the physical location of the foreign agent (or a confirmation thereof), as this is more reliable. Once the location of the foreign agent has been obtained, it can be compared against a policy associated with that location. If the mobile node is allowed mobile IP surfaces from the location of the foreign agent (the location of the mobile node being inferred from that of the foreign agent), then a registration-successful message will be sent back to the foreign agent, else a registration-unsuccessful message will be sent back.

It can be seen from the above that the location information in a certificate can be used by a node when deciding whether to provide information. In particular, the location information extracted from a certificate can be compared with stored location information, such that the decision as to whether surfaces are to be provided can be made at least in part in dependence upon the comparison between the extracted location information and the stored location information.

By using the certificate from a foreign agent (forwarding node) to make an authorisation decision, advantage can be taken of the increase security associated with a fixed node over that associated with a mobile node.

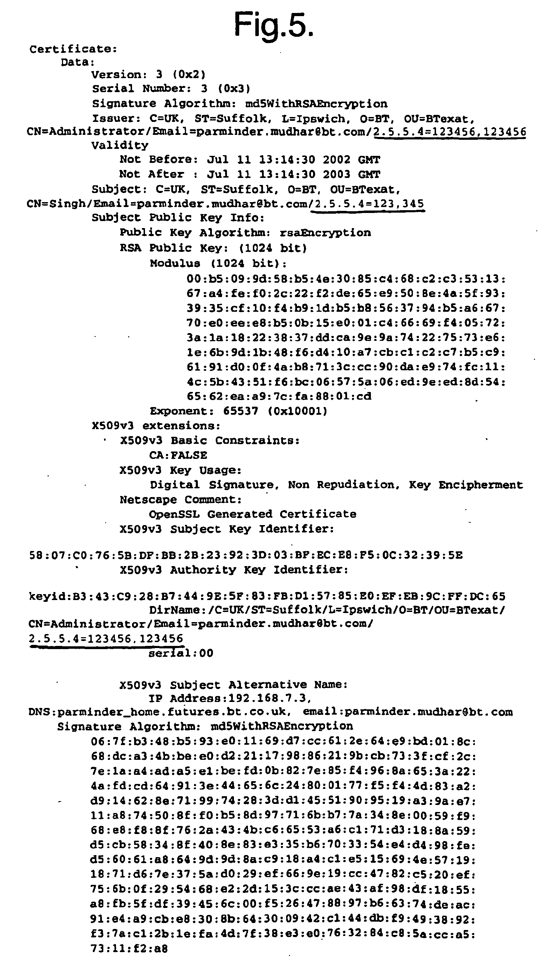

Further details on the implementation of one embodiment of the invention are provided below: the operating system used is FreeBSD [FreeBSD]. The internet Key Exchange (IKE) implementation comes from KAME [kame], the secure socket layer implementation comes from the openssl organisation [openssi] and the mobile IF implementation from Portland State University [psu]. The openssi code is used by the KAME IKE implementation. It is also assumed that security policy exists that state that secure communication must exist between the MN and the FA and also between the FA and the HA. One stage is to introduce the location attribute into the certificate. This is done by introducing a new object identifier of type 2.5.5.4 [old] and associating a value with this corresponding to the location expressed as x, y pair. It is also possible to include an altitude attribute as x, y, z where z represents the altitude although this was not done in this implementation. An example of such a certificate is shown in Figure 5 with the location object identifier and associated value shown underlined.

Another stage is to configure the IKE daemon, racoon [kane], to use certificates rather than pre-shared secrets. As shown schematically in Figure 3, the sending of the registration packet from the MN to FA initiates the generation of a security association between them. Lets focus on the creation of security associations between the FA and the HA since the creation of security associations between the FA and the MN is as described in standards [RFC2002]. Figure 4 shows the sequence of messages that occur in phase 1 of the creation of secure associations using IKE. Note that in Figure 4, the certificate payload has to be present since it may not be possible for the FA and the HA to get the certificate from other sources, say secure DNS. Where the diagram ends, phase 2 of the IKE processing can take place to create the IPsec secure association proper. It is intended to send the valid certificate to a local listener that will store the location and the IP address in a local file. The message from the IKE daemon is parsed. With regard to the processing of the certificate payload: the function saveFaLocation (currentLocation, ip_address) saves the location seen in the certificate and the associated ip address as a tuple in an ascii file. This file can then be read by other applications that require location dependent information. The home agent may have a policy for allowing mobility, which could be refined by defining bounded polygons for location, as in [RFC2009].

### References

| | |
|---|---|
| [RFC1712] | http://www.ietf.org/rfc/rfc1712.txt |
| [geobytes] | http://www.geobytes.com |
| [RFC2002] | http://www.ief.org/rfc/rfc2002.txt |
| [newbury] | http://www.newburynetworks.com |
| [RFC2401] | http://www.ietf.org/rfc/rfc2401.txt |
| [FreeBSD] | http://www.freebsd.org |
| [kame] | http://www.kame.net |
| [openssi] | http://www.openssi.org |
| [psu] | http://www.cs.pdx.edu/research/SMN/index.hrml |
| [oid] | http://www.alvestrand.no/objectid/ |

## Claims

1. A method of authorising data transfer to or from a mobile node (14) temporarily connected to an attachment point (20) of a network (12), the attachment point having a forwarding node (22) associated therewith for forwarding messages to or from the mobile node, the method including the steps of:
(a) receiving a digital certificate (50) from the forwarding node (22), which certificate includes a message body (52) and a digital signature (58) for verifying the content of the message body, the message body having geographical information therein, which geographical information is derived from the physical location of the forwarding node (20);
(b) performing a comparison between the geographical information of the certificate (50) and a further item of geographical information; and,
(c) making an authorisation decision for data transfer to or from the mobile node (14) in dependence on the result of the comparison.

2. A method as claimed in claim 1, wherein the digital certificate (50) is suitable for use in a public key encryption system

3. A method as claimed in claim 2, wherein the certificate is generated at a certificating node (28) having a public key and a private key associated therewith, and wherein the signature is a function, at least in part, of the private key of the certificating node (28).

4. A method as claimed in claim 2 or claim 3, including the step of verifying the authenticity of the digital certificate by performing a computation on at least part of certificate (50), the computation involving the public key associated with the certificating node.

5. A method as claimed in any of the preceding claims, wherein the mobile node (14) has a further digital certificate associated therewith, which further digital certificate includes geographical information, the method including the further step of receiving the further digital certificate from the mobile node, and using the geographical information from the further digital certificate to make the authorisation decision.

6. A method as claimed in claim 5, wherein a registration procedure is performed to allow data transfer between the forwarding node (22) and the mobile node (14), and wherein the registration procedure includes the steps of: receiving, at the forwarding node, the further digital certificate; and, comparing the geographical information in the further digital certificate with a further item of geographical information.

7. A method as claimed in any of the preceding claims, wherein the mobile node (14) has a temporary address and a permanent address associated therewith.

8. A method as claimed in claim 7, wherein the temporary address of the mobile node (14) is indicative of the topological position of the current point of attachment of the mobile node (14).

9. A method as claimed in claim 7 or claim 8, including the steps of:
- (i) intercepting packets addressed to the permanent address of the mobile node (14); and
- (ii) forwarding the intercepted packets towards the temporary address of mobile node, at least one of steps (i) and (ii) being authorised in dependence on the result of a comparison involving geographic information within a or the digital certificate (50).

10. A method as claimed in any of the preceding claims, wherein the forwarding node (22) is a fixed node.

11. A method as claimed in any preceding claim, including an authentication step.

12. A network node (24) for authorising the transfer of data to a mobile node (14) temporarily connected to a forwarding node (22), wherein the network node is configured, in response to receiving a digital certificate (50) from the forwarding node (22), to read at least part of the digital certificate (50), the digital certificate including geographical information derived from the physical location of the forwarding node, and wherein the network node is further configured to: perform a comparison between the geographical information of the certificate and a further item of geographical information; and, in dependence on the result of the comparison, to make an authorisation decision.

## Patentansprüche

1. Verfahren zur Autorisierung von Datenverkehr zu und von einem mobilen Knoten (14), der zeitweise mit einem Verbindungspunkt (20) eines Netzwerks (12) verbunden ist, wobei der Verbindungspunkt einen ihm zugeordneten Übermittlungs-Knoten (22) zur Übermittlung von Nachrichten zu und von dem mobilen Knoten aufweist, wobei das Verfahren folgende Schritte umfasst:
(a) Empfangen eines digitalen Zertifikats (50) von dem Übermittlungs-Knoten (22), wobei das Zertifikat einen Nachrichten-Hauptteil (52) und eine digitale Signatur (58) zur Verifizierung des Inhalts des Nachrichten-Hauptteils umfasst, wobei der Nachrichten-Hauptteil geographische Informationen enthält, wobei die geographischen Informationen von dem physikalischen Ort des Übermittlungs-Knotens (20) abgeleitet sind,
(b) Durchführen eines Vergleichs zwischen den geographischen Informationen des Zertifikats (50) und einem weiteren Objekt geographischer Informationen
und
(c) Treffen einer Autorisierungs-Entscheidung für Datenübertragung zu oder von dem mobilen Knoten (14) in Abhängigkeit von dem Ergebnis des Vergleichs.

2. Verfahren wie in Anspruch 1 beansprucht, bei dem das digitale Zertifikat (50) zur Verwendung in einem Verschlüsselungssystem mit öffentlichem Schlüssel geeignet ist.

3. Verfahren wie in Anspruch 2 beansprucht, bei dem das Zertifikat bei einem Zertifizierungs-Knoten (28) erzeugt wird, dem ein öffentlicher Schlüssel und ein privater Schlüssel zugeordnet sind, und bei dem die Signatur zumindest teilweise eine Funktion des privaten Schlüssels des Zertifizierungs-Knotens (28) ist.

4. Verfahren wie in Anspruch 2 oder Anspruch 3 beansprucht, das den Schritt des Verifizierens der Authentizität des digitalen Zertifikats durch Durchführen einer Berechnung zu mindestens einem Teil des Zertifikats (50) beinhaltet, wobei die Berechnung den dem Zertifizierungs-Knoten zugeordneten öffentlichen Schlüssel einschließt.

5. Verfahren wie in einem der vorhergehenden Ansprüche beansprucht, wobei der mobile Knoten (14) ein weiteres ihm zugeordnetes digitales Zertifikat aufweist, wobei das weitere digitale Zertifikat geographische Informationen beinhaltet, wobei das Verfahren den weiteren Schritt des Empfangens des weiteren digitalen Zertifikats von dem mobilen Knoten und des Verwendens der geographischen Informationen von dem weiteren digitalen Zertifikat zum Treffen der Autorisierungs-Entscheidung umfasst.

6. Verfahren wie in Anspruch 5 beansprucht, bei dem eine Registrierungs-Prozedur durchgeführt wird, um Datenübertragung zwischen dem Übermittlungs-Knoten (22) und dem mobilen Knoten (14) zuzulassen, und wobei die Registrierungs-Prozedur folgende Schritte umfasst: Empfangen des weiteren digitalen Zertifikats am Übermittlungs-Knoten und Vergleichen der geographischen Informationen in dem weiteren digitalen Zertifikat mit einem weiteren Objekt geographischer Informationen.

7. Verfahren wie in einem der vorhergehenden Ansprüche beansprucht, bei dem der mobile Knoten (14) eine temporäre Adresse und eine permanente Adresse aufweist, die ihm zugeordnet sind.

8. Verfahren wie in Anspruch 7 beansprucht, bei dem die temporäre Adresse des mobilen Knotens (14) die topologische Position des momentanen Verbindungspunktes des mobilen Knotens (14) anzeigt.

9. Verfahren wie in Anspruch 7 oder Anspruch 8 beansprucht, das folgende Schritte umfasst:
- (i) Abfangen von Paketen, die an die permanente Adresse des mobilen Knotens (14) adressiert sind,
und
- (ii) Übermitteln der abgefangenen Pakete zur temporären Adresse des mobilen Knotens, wobei mindestens einer der Schritte (i) und (ii) in Abhängigkeit von dem Ergebnis eines Vergleichs, der geographische Informationen in einem oder in dem digitalen Zertifikat (50) einschließt, autorisiert wird.

10. Verfahren wie in einem der vorhergehenden Ansprüche beansprucht, bei dem der Übermittlungs-Knoten (22) ein fester Knoten ist.

11. Verfahren wie in einem vorhergehenden Anspruch beansprucht, das einen Authentifizierungs-Schritt beinhaltet.

12. Netzwerk-Knoten (24) zur Autorisierung der Datenübertragung zu einem mobilen Knoten (14), der temporär mit einem Übermittlungs-Knoten (22) verbunden ist, wobei der Netzwerk-Knoten so ausgebildet ist, dass er unter Ansprechen auf das Empfangen eines digitalen Zertifikats (50) von dem Übermittlungs-Knoten (22) zumindest einen Teil des digitalen Zertifikats (50) liest, wobei das digitale Zertifikat geographische Informationen beinhaltet, die von dem physikalischen Ort des Übermittlungs-Knotens abgeleitet sind, und wobei der Netzwerk-Knoten ferner so ausgebildet ist, dass er einen Vergleich zwischen den geographischen Informationen des Zertifikats und einem weiteren Objekt geographischer Informationen durchführt und in Abhängigkeit von dem Ergebnis des Vergleichs eine Autorisierungs-Entscheidung trifft.

## Revendications

1. Procédé d'autorisation d'un transfert de données vers ou depuis un noeud mobile (14) provisoirement relié à un point de raccordement (20) d'un réseau (12), le point de raccordement ayant un noeud d'envoi (22) associé à celui-ci afin d'envoyer des messages vers ou depuis le noeud mobile, le procédé comprenant les étapes qui consistent à :
(a) recevoir un certificat numérique (50) de la part du noeud d'envoi (22), ledit certificat comprenant un corps de message (52) et une signature numérique (58) destinée à vérifier le contenu du corps de message, le corps de message contenant des informations géographiques, lesdites informations géographiques étant dérivées de l'emplacement physique du noeud d'envoi (20) ;
(b) effectuer une comparaison entre les informations géographiques du certificat (50) et un autre élément des informations géographiques ; et
(c) prendre une décision d'autorisation de transfert de données vers ou depuis le noeud mobile (14) selon le résultat de la comparaison.

2. Procédé selon la revendication 1, dans lequel le certificat numérique (50) peut être utilisé dans un système de cryptage de clé publique.

3. Procédé selon la revendication 2, dans lequel le certificat est généré au niveau d'un noeud de certification (28) qui possède une clé publique et une clé privée associées à celui-ci, et dans lequel la signature dépend, au moins en partie, de la clé privée du noeud de certification (28).

4. procédé selon la revendication 2 ou 3, qui comprend l'étape qui consiste à vérifier l'authenticité du certificat numérique en effectuant un calcul sur au moins une partie du certificat (50), le calcul impliquant la clé publique associée au noeud de certification.

5. Procédé selon l'une quelconque des revendications précédentes, dans lequel le noeud mobile (14) possède un autre certificat numérique associé à celui-ci, ledit autre certificat numérique comprenant des informations géographiques, le procédé comprenant l'étape supplémentaire qui consiste à recevoir l'autre certificat numérique de la part du noeud mobile, et à utiliser les informations géographiques qui proviennent de l'autre certificat numérique pour prendre la décision d'autorisation.

6. Procédé selon la revendication 5, dans lequel une procédure d'enregistrement est exécutée afin de permettre un transfert de données entre le noeud d'envoi (22) et le noeud mobile (14), et dans lequel la procédure d'enregistrement comprend les étapes qui consistent à : recevoir, au niveau du noeud d'envoi, l'autre certificat numérique, et à comparer les informations géographiques de l'autre certificat numérique avec un autre élément des informations géographiques.

7. Procédé selon l'une quelconque des revendications précédentes, dans lequel le noeud mobile (14) possède une adresse provisoire et une adresse permanente associées à celui-ci.

8. Procédé selon la revendication 7, dans lequel l'adresse provisoire du noeud mobile (14) indique la position topologique du point de raccordement actuel du noeud mobile (14).

9. Procédé selon la revendication 7 ou 8, qui comprend les étapes qui consistent à :
- (i) intercepter les paquets adressés à l'adresse permanente du noeud mobile (14) ;
et
- (ii) envoyer les paquets interceptés vers l'adresse provisoire du noeud mobile, au moins l'une des étapes (i) et (ii) étant autorisée selon le résultat d'une comparaison qui implique les informations géographiques contenues dans un ou le certificat numérique (50).

10. Procédé selon l'une quelconque des revendications précédentes, dans lequel le noeud d'envoi (22) est un noeud fixe.

11. Procédé selon l'une quelconque des revendications précédentes, qui comprend une étape d'authentification.

12. Noeud de réseau (24) destiné à autoriser le transfert de données vers un noeud mobile (14) provisoirement relié à un noeud d'envoi (22), dans lequel le noeud de réseau est configuré, en réponse à la réception d'un certificat numérique (50) de la part du noeud d'envoi (22), pour lire au moins une partie du certificat numérique (50), le certificat numérique comprenant des informations géographiques dérivées de l'emplacement physique du noeud d'envoi, et dans lequel le noeud de réseau est en outre configuré pour : effectuer une comparaison entre les informations géographiques du certificat et un autre élément des informations géographiques ; et, selon le résultat de la comparaison, pour prendre une décision d'autorisation.
